# EUROPÄISCHE PATENTANMELDUNG

(11) **EP 0 849 676 A2**
(43) Veröffentlichungstag der Anmeldung: **24.06.1998**
(21) Anmeldenummer: 97203811.1
(22) Anmeldetag: 05.12.1997
(51) Int. Cl.: G06F 11/14

(54) **Software-Aktualisierungssystem**

(30) Priorität: 18.12.1996 DE 19652628
(71) Anmelder: Philips Patentverwaltung GmbH, 22335 Hamburg (DE); Philips Electronics N.V., 5621 BA Eindhoven (NL)
(72) Erfinder: Laugner, Armin, Dipl.-Ing., 22335 Hamburg (DE)
(74) Vertreter: Volmer, Georg, Dipl.-Ing.

(57) **Zusammenfassung**

Die Erfindung bezieht sich auf ein Kommunikationssystem mit einem Endgerät (1), welches eine Steuerschaltung (5) und wenigstens zwei Speicher (6, 7) zur Speicherung von Software enthält, und mit einer Station (1) zur Lieferung von Software an das Endgerät, dessen Steuerschaltung (5) nach einem Austauschbefehl zum Austausch von in wenigstens einem Speicher (6, 7) enthaltenen Software vorgesehen ist. Die Software besteht aus wenigstens zwei Blöcken, die in jeweils einem Speicher (6, 7) abgelegt sind, und ein Block davon spezielle Funktionen für einen Austauschvorgang enthält. Während eines Austauschvorgangs ist die Steuerschaltung (5) zuerst zur Ersetzung des Blocks ohne die speziellen Funktionen durch eine neue Version des Blocks mit den speziellen Funktionen vorgesehen.

## Beschreibung

Die Erfindung bezieht sich auf ein Kommunikationssystem mit einem Endgerät, welches eine Steuerschaltung und wenigstens zwei Speicher zur Speicherung von Software enthält, und mit einer Station zur Lieferung von Software an das Endgerät, dessen Steuerschaltung nach einem Austauschbefehl zum Austausch von in wenigstens einem Speicher enthaltenen Software vorgesehen ist.

Ein solches Kommunikationssystem ist aus der DE 43 33 272 A1 bekannt, welches ein mit einem Netzwerk gekoppeltes Endgerät und eine Wartungsvorrichtung enthält. Die Wartungsvorrichtung sendet über das Netzwerk eine neue Betriebs-Software für eine Steuerschaltung des Endgerätes, welche in dem Endgerät mittels einer in der Steuerschaltung enthaltenen Austausch-Steuereinheit ausgetauscht wird. Die Austausch-Steuereinheit benutzt für den Austauschvorgang eine Austausch-Software, die in einem Austauschspeicher abgelegt ist. Die Betriebs-Software ist in einem anderen Speicher, der Betriebsspeicher genannt wird, gespeichert. Bei diesem Kommunikationssystem ist für den Austauschvorgang ein separater Speicher (Austauschspeicher) und eine separate Steuereinheit (Austausch-Steuereinheit) notwendig.

Der Erfindung liegt die Aufgabe zugrunde, ein Kommunikationssystem zu schaffen, bei dem der Schaltungsaufwand zum Austausch von Software in einem Endgerät geringer ist.

Die Aufgabe wird bei einem Kommunikationssystem der eingangs genannten Art dadurch gelöst, daß die Software aus wenigstens zwei Blöcken besteht, die in jeweils einem Speicher abgelegt sind, und ein Block davon spezielle Funktionen für einen Austauschvorgang enthält und daß während eines Austauschvorgangs die Steuerschaltung zuerst zur Ersetzung des Blocks ohne die speziellen Funktionen durch eine neue Version des Blocks mit den speziellen Funktionen vorgesehen ist.

Bei dem erfindungsgemäßen Kommunikationssystem führt die Steuerschaltung im Endgerät den Austauschvorgang der in zwei Blöcke eingeteilten und in wenigstens zwei Speichern abgelegten Software durch. Es wird zuerst eine neue Version des Blockes in einem Speicher abgelegt, welcher spezielle Funktionen für den Austauschvorgang aufweist. Als neue Version eines Blockes ist ein von der Station gelieferter Block der Software anzusehen, welcher gegenüber der bisherigen Version unverändert oder geändert ist. Solche speziellen Funktionen sind Lösch- und Speicherfunktionen, die beim Austausch der Blöcke in den Speichern benötigt werden. Der in dem Speicher enthaltene Block ohne spezielle Funktionen wird zuvor gelöscht. Anschließend ersetzt die Steuerschaltung die alte Version des Blocks mit den speziellen Funktionen durch eine neue Version des Blocks ohne die speziellen Funktionen. Für den Austauschvorgang ist nicht ein separater Speicher notwendig, sondern es wird der Arbeitsspeicher (Zwischenspeicher) der Steuerschaltung verwendet, die beispielsweise als Mikroprozessorsystem ausgebildet ist. Es wird auch keine weitere Steuereinheit für den Austausch benutzt, sondern die Steuerschaltung, welche auch die normalen Betriebsfunktionen durchführt, wird hierfür benutzt.

Es kann während des Austauschvorgangs eine Störung auftreten (z.B. Stromausfall). Ist z.B. während des Ausfalls eine neue rudimentäre Software, die für die grundlegenden Funktionen der Steuerschaltung notwendig ist und die von der Steuerschaltung nach Inbetriebnahme zuerst aus einem bestimmten Speicher gelesen wird, übertragen worden, kann das Endgerät nicht mehr betrieben werden, da die rudimentäre Software nicht mehr in dem bestimmten Speicher vorhanden ist. Um eine Inbetriebnahme des Gerätes auch nach einer Störung immer zu ermöglichen, löscht die Steuerschaltung während des Austauschvorgangs nicht den Bereich eines Speichers, der eine rudimentäre Software zur Durchführung grundlegender Funktionen der Steuerschaltung enthält.

Ein Austauschvorgang kann von einer Steuerzentrale gestartet werden, die mit dem Endgerät und der Station über ein Netzwerk gekoppelt ist. Nach einem Verbindungsaufbau mit dem Endgerät und der Station wird von der Steuerzentrale jeweils ein Austauschbefehl ausgesendet. Anschließend wird nach Aufbau einer ersten Verbindung die Station nacheinander Segmenten eines ersten Blocks an das Endgerät senden. Das Endgerät ist nach Empfang der Segmente des ersten Blocks in einem Zwischenspeicher der Steuerschaltung zur Übertragung der Segmente zu einem ersten Speicher vorgesehen. Am Ende der Übertragung aller Segmente des ersten Blocks und einem Verbindungsabbau baut die Steuerschaltung eine zweite Verbindung mit der Station auf und empfängt Segmente eines zweiten Blocks von der Station. Das Endgerät ist nach Empfang der Segmente des zweiten Blocks in einem Zwischenspeicher der Steuerschaltung zur Übertragung der Segmente zu einem zweiten Speicher vorgesehen. Hierbei löscht die Steuerschaltung nach Speicherung des ersten Segments des ersten oder zweiten Blocks in dem Zwischenspeicher den ersten oder zweiten Speicher.

Ein Ausführungsbeispiel der Erfindung wird anhand der Fig. näher erläutert. Es zeigen:
- Fig. 1: ein schematisch dargestelltes Kommunikationssystem mit zwei Endgeräten und einer Steuerzentrale,
- Fig. 2: ein Blockschaltbild eines Endgerätes und
- Fig. 3 und 4: Blöcke zur Verdeutlichung des Austauschvorgangs von Software in dem Endgerät.

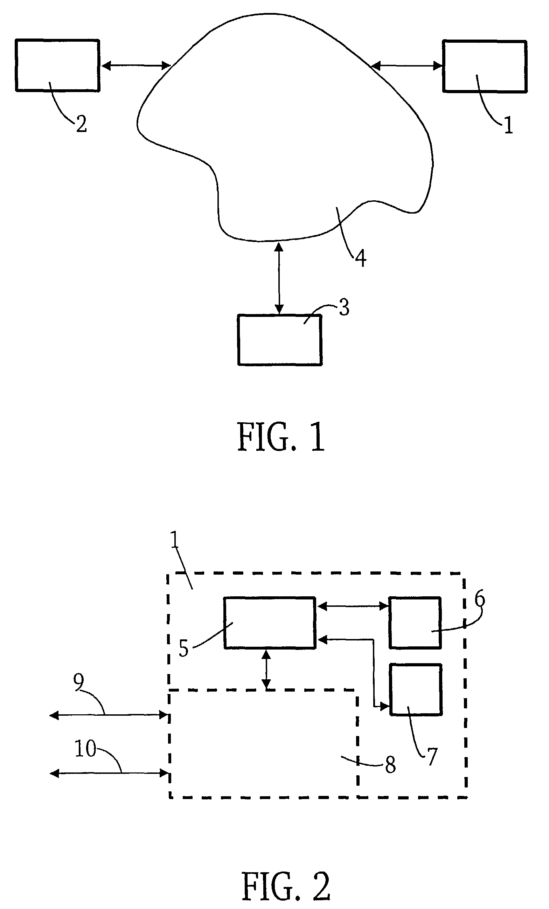

In Fig. 1 ist schematisch ein Komunikationssystem dargestellt, mit einem Endgerät 1, einer Station 2 zur Lieferung von Software und einer Steuerzentrale 3. Das Endgerät 1, die Station 2 und die Steuerzentrale 3 sind mit dem restlichen schematisch angedeuteten Netzwerk 4 gekoppelt, das z.B. ein dienstintegriertes digitales Netzwerk (ISDN) ist. Ein solches Endgerät 1 kann beispielsweise ein Terminaladapter zur Anpassung einer ISDN-S₀-Schnittstelle an eine a/b-Schnittstelle sein. Die Station 2 kann eine Übertagungseinheit eines Endgerätes sein oder, was im folgenden vorausgesetzt wird, selbst ein Endgerät sein.

Das Endgerät 1 enthält eine Steuerschaltung 5, z.B. einen Mikroprozessor, zur Steuerung der gesamten Vorgänge im Endgerät 1, zwei nichtflüchtige Speicher 6 und 7, die auch im ausgeschalteten Zustand des Endgerätes 1 die gespeicherten Daten behalten und beispielsweise Flash-EPROM's sein können, und eine Schaltungseinheit 8, die nicht weiter beschrieben wird und z.B. die Schnittstellenfunktion des als Terminaladapters ausgebildeten Endgerätes 1 ausführt. In den beiden nichtflüchtigen Speichern 6 und 7 sind jeweils zwei Softwareblöcke mit jeweils einer gleichen oder unterschiedlichen Versionsnummer enthalten. Die Software ist zum Betrieb des Endgerätes 1 erforderlich. Die Steuerschaltung 5 liest nach dem Einschalten oder einen Neustart (Reset) immer zuerst die Software aus dem ersten Speicher 6. In diesem Speicher 6 ist auch ein Softwareteil (rudimentäre Software) vorhanden, der von der Steuerschaltung 5 zuerst gelesen wird und zur Ausführung grundlegender Funktionen des Endgerätes 1 vorgesehen ist. Das Endgerät 2 weist einen identischen Aufbau auf.

Die Steuerzentrale 3 hat die Funktion einen Softwaretausch in dem Endgerät 1 zu veranlassen. Die Software wird von der Station oder dem Endgerät 2 geliefert. Hierzu wird nach Aussendung eines Austauschbefehls von der Steuerzentrale 3 das Endgerät 1 und die Station 2 in einen Austauschzustand versetzt. Es ist auch möglich, daß das Endgerät 1 und ebenso die Station 2 jeweils durch einen lokal eingegebenen Befehl in den Austauschzustand versetzt werden. Im folgenden wird das Endgerät 1 als Empfänger und die Station 2 als Sender bezeichnet.

Die Software für das Endgerät 1 oder den Empfänger besteht aus zwei gleich großen Blöcken A und B, welche jeweils mit einer Versionsnummer versehen sind und in den als Flash-EPROM's ausgebildeten Speichern 6 und 7 abgelegt sind. Während des Softwaretausches werden nacheinander jeweils zwei Verbindungen aufgebaut, um die Blöcke A und B zu erneuern. Hierbei ist nur zu Beginn und am Ende eine Software mit Blöcken A und B gleicher Versionsnummer vorhanden.

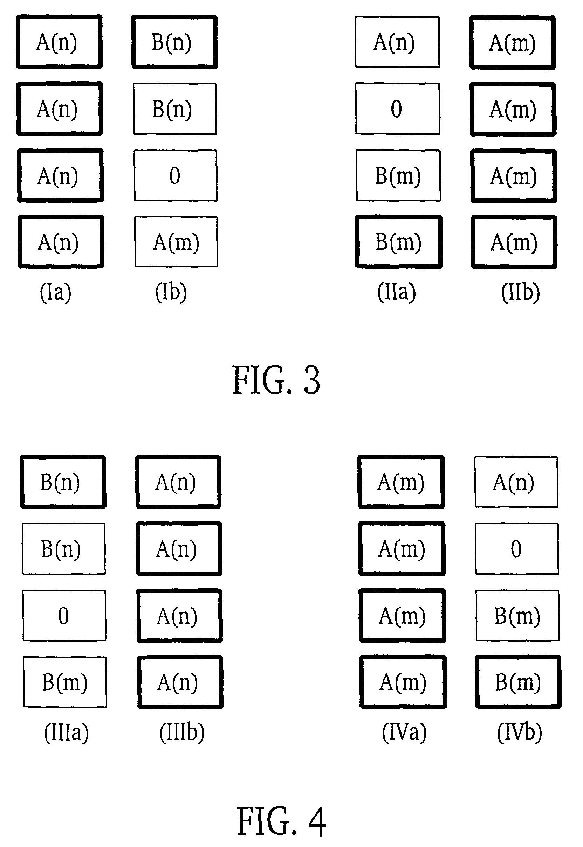

Mittels der Fig. 3 und 4 wird der Grobablauf des Austausches erläutert. Die mit (Ia), (IIa), (IIIa) und (IVa) gekennzeichneten Blöcke zeigen die Inhalte des Speichers 6 während verschiedener Stadien beim Softwaretausch. Die mit (Ib), (IIb), (IIIb) und (IVb) gekennzeichneten Blöcke beziehen sich auf verschiedene Stadien des Speichers 7 beim Softwaretausch. Zuerst werden die in der Fig. 3 mit (Ia) und (Ib) gekennzeichneten Blöcke betrachtet. Es ist erkennbar, daß im Speicher 6 ein Block A mit der Versionsnummer n und im Speicher 7 ein Block B ebenfalls mit der Versionsnummer n enthalten ist. Nachdem die Erneuerung der Software gestartet worden ist, wird nur noch der Block A verwendet. Nach Verbindungsaufbau werden die Daten eines Blockes A mit der Versionsnummer m übertragen und die Daten in den zuvor gelöschten Speicher 7 geschrieben. Im Speicher 6 ist dann ein Block A mit der Versionsnummer n und im Speicher 7 ein Block A mit der Versionsnummer m enthalten. Anschließend wird die Verbindung abgebaut und ein Neustart (Reset) durchgeführt. Die Software erkennt, daß noch ein Block B übertragen werden muß. Die nächsten Stadien des Softwaretausches sind schematisch durch die mit (IIa) und (IIb) gekennzeichneten Blöcke in Fig. 3 gezeigt. Von der Software wird erkannt, daß nur noch der Block A mit der Versionsnummer m verwendet werden kann. Nach Verbindungsaufbau, Löschung des Speichers 6 und Programmierung des Speichers 6 mit den Daten des übertragenen Blockes B mit der Versionsnummer m ist der Austausch beendet.

Fig. 4 zeigt den komplementären Austauschvorgang. In Speicher 6 ist zu Beginn der Block B mit der Versionsnummer n (IIIa) und am Ende des Austauschvorganges der Block A mit der Versionsnummer m (IVa) gespeichert. Der Speicher 7 enthält zuerst den Block A mit der Versionsnummer n (IIIb) und zuletzt den Block B mit der Versionsnummer m (IVb). Hierbei wird zuerst der Block B mit der Versionsnummer n durch den Block A mit der Versionsnummer m ersetzt.

Aus dem beschriebenen Grobablauf ist sichtbar, daß immer ein lauffähiger Block A vorhanden sein muß, weil dieser ausschließlich die Funktionen zum Löschen und Programmieren der Speicher 6 und 7 aufweist. Wird die Austauschprozedur unterbrochen, wird das Engerät 1 oder der Empfänger neu gestartet (Reset). Damit nach einem Abbruch der Austausch wieder gestartet werden kann, weist jeder Softwareblock A und B die oben erwähnte rudimentäre Software auf. Nach einem Abbruch und dem darauffolgenden Neustart wird also zuerst von der Steuerschaltung 5 die im Speicher 6 enthaltene rudimentäre Software geladen und dann aus dem vollständigen Block A die Lösch- und Programmierfunktion entnommen.

Im folgenden wird eine genauere Ablaufbeschreibung der Austauschprozedur erläutert. Die Steuerzentrale 3 sendet dem Sender nach dem Verbindungsaufbau den Austauschbefehl. Die Steuerschaltung 5 des Senders setzt daraufhin die Marke "SWDL_TRA" und ist zum Übertragen der Software bereit. Es wird dann ein Neustart (Reset) vom Sender durchgeführt. Der Empfänger wird auch von der Steuerzentrale 3 angerufen. Nach dem Verbindungsaufbau sendet die Steuerzentrale 3 dem Empfänger den Austauschbefehl, die Rufnummer des Senders und die zu übertragende Versionsnummer der Software. Die Steuerschaltung 5 des Empfängers setzt die Marke "SWDL_REC" und führt einen Neustart (Reset) durch.

Nach einem Neustart erkennt die Steuerschaltung 5 des Empfängers die Marke "SWDL_REC" und versucht eine Verbindung mit dem Sender aufzubauen. Die Steuerschaltung 5 des Senders erkennt nach dem Neustart die Marke "SWDL_TRA" und nimmt den Ruf des Empfängers an. Nach einem erfolgreichen Verbindungsaufbau fordert die Steuerschaltung 5 des Empfängers mittels eines Anforderungsbefehls einen ersten Block mit der von der Steuerzentrale 3 genannten Versionsnummer von dem Sender an. Nach Empfang des Anforderungsbefehls übermittelt der Sender unter Steuerung seiner Steuerschaltung 5 die Versionsnummer der gespeicherten Software. Nach Erhalt vergleicht die Steuerschaltung 5 des Empfängers die von der Steuerzentrale 3 mitgeteilte Versionsnummer mit der von dem Sender gelieferten Versionsnummer.

Ergibt der Vergleich, daß die Versionsnummern nicht übereinstimmen, sendet der Empfänger die Meldung "FFF2" zum Sender. Diese Meldung gibt an, daß die Software mit der Versionsnummer nicht benötigt wird. Der Empfänger löst die Verbindung aus, löscht die Marke "SWDL_REC" und führt einen Neustart (Reset) durch. Der Sender empfängt die Meldung "FFF2" und den Auslösungsbefehl. Die Steuerschaltung 5 des Senders läßt die Marke "SWDL_TRA" gesetzt und führt keinen Neustart durch.

Wenn die Versionsnummern übereinstimmen, sendet die Steuerschaltung 5 des Empfängers den Befehl "FFF0" zu dem Sender und fordert damit die Übertragung des Blockes beim Sender an. Die Blöcke A und B der Software sind in Segmente unterteilt. Nachdem die Steuerschaltung 5 von dem Sender den Befehl "FFF0" empfangen hat, wird ein erstes Segment zum Empfänger gesendet. Das im Empfänger angekommende erste Segment wird in einem Zwischenspeicher, der Bestandteil der Steuerschaltung 5 des Empfängers ist, zwischengespeichert. Anschließend sendet die Steuerschaltung 5 des Empfängers eine Quittierungsnachricht an die Steuerschaltung 5 des Senders. Dieser Prozeß des Sendens von Segmenten vom Sender zum Empfänger wird mit weiteren Segmenten solange fortgeführt, bis der Zwischenspeicher in der Steuerschaltung 5 des Empfängers gefüllt ist. Nachdem der Zwischenspeicher mit Segmenten des ersten Blockes gefüllt worden ist, wird in einem nächsten Schritt der Inhalt eines ersten Speichers (6 oder 7) von der Steuerschaltung 5 des Empfängers gelöscht.

Detektiert die Steuerschaltung 5 des Empfängers einen Fehler bei der Löschung des ersten Speichers, wird von dieser die Fehlermeldung "FFFE" zum Sender geliefert.

Der Empfänger löst die Verbindung aus und führt einen Neustart (Reset) durch. Der Sender empfangt die Meldung "FFFE" und den Auslösungsbefehl. Die Steuerschaltung 5 des Senders läßt die Marke "SWDL_TRA" gesetzt und führt keinen Neustart des Senders durch. Anschließend wird erneut eine Verbindung zwischen Sender und Empfänger aufgebaut und die Übertragung der Versionsnummern und der Segmente des ersten Blockes wiederholt.

Ist die Löschung des ersten Speichers erfolgreich durchgeführt worden, werden die im Zwischenspeicher liegenden Segmente in den ersten Speicher überschrieben (Programmierung des Speichers). Tritt hierbei ein Übertragungs- oder Speicherfehler auf, wird derselbe Vorgang durchgeführt wie bei einem Löschfehler.

Ist die Übertragung der ersten Segmente von dem Zwischenspeicher der Steuerschaltung 5 zum ersten Speicher erfolgreich beendet worden, fordert die Steuerschaltung 5 des Empfängers weitere Segmente von der Steuerschaltung 5 des Senders an. Der Sender übermittelt dann nacheinander Segmente des Blockes A in aufsteigender Reihenfolge an den Empfänger. Das bedeutet, daß nacheinander beispielsweise die Segmente 11, 12, ..., 19 und 20 übertragen werden, wenn in einem ersten Schritt die Segmente 1 bis 10 gesendet worden sind. Die Segmente werden in dem Zwischenspeicher abgelegt und nach Füllung des Zwischenspeichers wird eine Quittierungsmeldung an den Sender geschickt. Es folgt dann die Übertragung der Segmente an den ersten Speicher.

Für die restlichen Segmente des ersten Blockes wird analog verfahren. Nachdem das letzte Segment in den ersten Speicher geladen worden ist, wird von dem Empfänger eine Fertigmeldung "FFF1" zum Sender übertragen, die Verbindung ausgelöst und ein Neustart (Reset) durchgeführt. Nach dem Neustart erkennt der Empfänger die gesetzten Marke "SWDL_REC" und baut eine erneute Verbindung mit dem Sender auf. Nach dem Verbindungsaufbau wird der oben geschilderte Vorgang für den ersten Block auch für den zweiten Block der Software durchgeführt. Die Segmente des zweiten Blockes werden aber in den zweiten Speicher (7 oder 6) geschrieben. Sind beide Blöcke übertragen, sendet der Empfänger eine Erfolgsmeldung an die Steuerzentrale 3, falls diese den Austausch veranlaßt hat.

Falls während des Softwaretausches die Verbindung unterbrochen wird, wird der Empfänger neu gestartet und der Softwaretausch mit dem ersten Block dann begonnen, wenn die Segmente nicht komplett übertragen worden sind. Im anderen Fall wird mit der Übertragung des zweiten Blockes begonnen.

Falls die Verbindung während der Übertragung der rudimentären Software für den Speicher 6 gestört worden ist (z.B. Stromausfall), kann das Endgerät 2 nicht wieder in Betrieb genommen werden. Daher kann der oben geschilderte Ablauf so geändert werden, daß ein Austausch der rudimentären Software ausgeschlossen ist.

## Patentansprüche

1. Kommunikationssystem mit einem Endgerät (1), welches eine Steuerschaltung (5) und wenigstens zwei Speicher (6, 7) zur Speicherung von Software enthält, und mit einer Station (2) zur Lieferung von Software an das Endgerät, dessen Steuerschaltung (5) nach einem Austauschbefehl zum Austausch von in wenigstens einem Speicher (6, 7) enthaltener Software vorgesehen ist,
dadurch gekennzeichnet,
daß die Software aus wenigstens zwei Blöcken besteht, die in jeweils einem Speicher (6, 7) abgelegt sind, und ein Block davon spezielle Funktionen für einen Austauschvorgang enthält und
daß während eines Austauschvorgangs die Steuerschaltung (5) zuerst zur Ersetzung des Blocks ohne die speziellen Funktionen durch eine neue Version des Blocks mit den speziellen Funktionen vorgesehen ist.

2. Kommunikationssystem nach Anspruch 1,
dadurch gekennzeichnet,
daß nach Ersetzung des Blocks ohne spezielle Funktionen die Steuerschaltung (5) zur Ersetzung der alten Version des Blocks mit den speziellen Funktionen durch eine neue Version des Blocks ohne die speziellen Funktionen vorgesehen ist.

3. Kommunikationssystem nach Anspruch 1 oder 2,
dadurch gekennzeichnet,
daß ein Block spezielle Funktionen für einen Lösch- oder und Speichervorgang enthält.

4. Kommunikationssystem nach einem der Ansprüche 1 bis 3,
dadurch gekennzeichnet,
daß die Steuerschaltung (5) während des Austauschvorgangs nicht zur Löschung des Bereichs eines Speichers (6, 7) vorgesehen ist, der eine rudimentäre Software zur Durchführung grundlegender Funktionen der Steuerschaltung (5) enthält.

5. Kommunikationssystem nach einem der Ansprüche 1 bis 4,
dadurch gekennzeichnet,
daß eine Steuerzentrale (3), die mit dem Endgerät (1) und der Station (2) über ein Netzwerk (4) gekoppelt ist, nach einem Verbindungsaufbau mit dem Endgerät (1) und der Station (2) jeweils zur Aussendung eines Austauschbefehls vorgesehen ist.

6. Kommunikationssystem nach einem der Ansprüche 1 bis 5,
dadurch gekennzeichnet,
daß nach Aufbau einer ersten Verbindung die Station (2) nacheinander zur Sendung von Segmenten eines ersten Blocks an das Endgerät (1) vorgesehen ist,
daß das Endgerät (1) nach Empfang der Segmente des ersten Blocks in einem Zwischenspeicher der Steuerschaltung (5) zur Übertragung der Segmente zu einem ersten Speicher (6, 7) vorgesehen ist,
daß am Ende der Übertragung aller Segmente des ersten Blocks und einem Verbindungsabbau die Steuerschaltung (5) zum Aufbau einer zweiten Verbindung mit der Station (2) und zum Empfang von Segmenten eines zweiten Blocks von der Station (2) vorgesehen ist und
daß das Endgerät (1) nach Empfang der Segmente des zweiten Blocks in einem Zwischenspeicher der Steuerschaltung (5) zur Übertragung der Segmente zu einem zweiten Speicher (6, 7) vorgesehen ist.

7. Kommunikationssystem nach Anspruch 6,
dadurch gekennzeichnet,
daß die Steuerschaltung (5) nach Speicherung des ersten Segments des ersten oder zweiten Blocks in dem Zwischenspeicher zur Löschung des ersten oder zweiten Speichers (6, 7) vorgesehen ist.

8. Kommunikationssystem nach einem der Ansprüche 1 bis 7,
dadurch gekennzeichnet,
daß der Speicher (6, 7) ein Flash-EPROM ist.
